# EUROPEAN PATENT APPLICATION

(11) **EP 1 267 430 A1**
(43) Date of publication of application: **18.12.2002**
(21) Application number: 01912386.8
(22) Date of filing: 15.03.2001
(51) Int. Cl.: H01M 4/02, H01M 4/48, H01M 10/40

(54) **RECHARGEABLE BATTERY USING NONAQUEOUS ELECTROLYTE**

(30) Priority: 22.03.2000 JP 2000080913; 22.03.2000 JP 2000080914; 10.05.2000 JP 2000137124
(71) Applicant: Sanyo Electric Co., Ltd., Moriguchi-shi, Osaka-fu 570-8677 (JP)
(72) Inventor: SUNAGAWA, Takuya c/o SANYO ELECTRIC CO., LTD., Moriguchi-shi, Osaka 570-8677 (JP); IKEDA, Hiroaki c/o SANYO ELECTRIC CO., LTD., Moriguchi-shi, Osaka 570-8677 (JP); DOMOTO, Yoichi c/o SANYO ELECTRIC CO., LTD., Moriguchi-shi, Osaka 570-8677 (JP); FUJIMOTO, Masahisa c/o SANYO ELECTRIC CO., LTD., Moriguchi-shi, Osaka 570-8677 (JP); OHSHITA, Ryuji c/o SANYO ELECTRIC CO., LTD., Moriguchi-shi, Osaka 570-8677 (JP); SHIMA, Masaki c/o SANYO ELECTRIC CO., LTD., Moriguchi-shi, Osaka 570-8677 (JP); YAGI, Hiromasa c/o SANYO ELECTRIC CO., LTD., Moriguchi-shi, Osaka 570-8677 (JP); TARUI, Hisaki c/o SANYO ELECTRIC CO., LTD., Moriguchi-shi, Osaka 570-8677 (JP); FUJITANI, Shin c/o SANYO ELECTRIC CO., LTD., Moriguchi-shi, Osaka 570-8677 (JP)
(74) Representative: Merkle, Gebhard
(86) International application number: JP0102047
(87) International publication number: WO01071832

(57) **Abstract**

A nonaqueous electrolyte rechargeable battery using molybdenum oxide in the form of thin film deposited on an aluminum-containing substrate, as a positive electrode material.

## Description

### TECHNICAL FIELD

The present invention relates to a nonaqueous electrolyte rechargeable battery including a positive electrode, a negative electrode and a nonaqueous electrolyte, and more particularly to a nonaqueous electrolyte rechargeable battery using molybdenum oxide as the positive electrode material.

### BACKGROUND ART

Rechargeable lithium batteries, currently under practical use, use lithium cobalt oxide (LiCoO₂) or lithium manganate (LiMn₂O₄) as the positive electrode material and carbon material as the negative electrode material. However, portable equipments demand rechargeable batteries having further longer operating time. There accordingly is a need for rechargeable batteries which have the increased capacities and energy densities. Meanwhile, lithium cobalt oxide, the most popular positive electrode material, is a rare resource and expensive. Accordingly, its substituents have been sought extensively.

One possible substituent of lithium cobalt oxide may be molybdenum oxide. Although cobalt in lithium cobalt oxide changes in oxidation state from trivalent to tetravalent form, molybdenum in molybdenum oxide is changeable in oxidation state from tetravalent to hexavalent form. Hence, the increased capacity and energy density can be expected from the use of molybdenum oxide in place of lithium cobalt oxide.

However, conventional rechargeable lithium batteries using molybdenum oxide in place of lithium cobalt oxide remain to exhibit lower discharge capacities than theoretical capacities. Japanese Patent Laid-Open Nos. Hei 11-250907 and Hei 3-88269 propose the use of molybdenum oxide in the noncrystalline form. This however has been still insufficient in terms of capacity and energy density.

The present applicant has proposed the use of a silicon thin film deposited on a negative current collector as a high-capacity negative electrode material for rechargeable lithium batteries (Japanese Patent Application No. Hei 11-301646). This negative electrode material is capable of 3,000 - 4,000 mAh/g or higher at the negative electrode.

However, in the case where a rechargeable lithium battery is fabricated using such a silicon thin film as the negative electrode material and lithium cobalt oxide as the positive electrode material, a thickness of the layer of positive active material must be made considerably large to balance the positive electrode capacity against the negative electrode capacity. This makes it difficult for the electrolyte to penetrate through the layer of positive active material during the manufacturing process. This may also cause problematic depletion of the electrolyte present in the layer of positive active material during charge-discharge cycles, which results in the reduced charge-discharge cycle characteristics. There accordingly remains a need for development of a positive electrode material having a positive electrode capacity well balanced in level against a high negative electrode capacity.

### DISCLOSURE OF THE INVENTION

It is a first object of the present invention to provide a nonaqueous electrolyte rechargeable battery using molybdenum oxide as a positive electrode material, which has high capacity and energy density.

It is a second object of the present invention to provide a nonaqueous electrolyte rechargeable battery using a thin film of silicon as negative active material, which exhibits high capacity and energy density and excellent charge-discharge cycle characteristics.

A nonaqueous electrolyte rechargeable battery in accordance with a first aspect of the present invention includes a positive electrode, a negative electrode, and a nonaqueous electrolyte. Characteristically, it uses molybdenum oxide in the form of a thin film deposited on an aluminum-containing substrate as the positive electrode.

In the first aspect of the present invention, a surface of the substrate that carries the thin film of molybdenum oxide thereon contains aluminum, specifically comprises aluminum or its alloy. Preferably, such thin film-forming techniques as CVD, sputtering, vacuum evaporation and spraying may be used to deposit the thin film on the substrate.

Conventionally, the provision of a thin film of molybdenum oxide on a silica glass substrate or a silicon wafer has been studied (see, for example, C.Julien, G.A.Nazri, J.P.Guesdon, A.Gorenstein, A.Khelfa, O.M.Hussain, Solid State Ionics 73(1994) 319-326). However, the molybdenum oxide thin film deposited on the aluminum-containing substrate in the first aspect of the present invention has a crystal structure which is different from that of the conventionally-used thin film of molybdenum oxide. This is probably because the crystal structure of the deposited film has been subjected to the influence of the substrate. More specifically, the surface structure, physical and chemical properties of the substrate are believed to affect the crystal structure, grain shape, physical and chemical properties of the molybdenum oxide thin film to be deposited thereon. This is believed to change the site at which insertion and deinsertion of lithium occurs to result in the increased discharge capacity and energy density.

A first thin film of molybdenum oxide in accordance with the first aspect of the present invention is characterized as satisfying the relationship 0 ≦ I(020)/I(110) ≦ 0.3, wherein I(020) is an intensity of a peak present in the range of 2θ = 12.7 ± 1.0° and I(110) is an intensity of a peak present in the range of 2θ = 23.3 ± 1.0°, when determined by X-ray diffraction analysis using Cu-Kα as an X-ray source.

A second thin film of molybdenum oxide in accordance with the first aspect of the present invention is characterized as satisfying the relationship 0 ≦ I(020)/I(021) ≦ 0.2, wherein I(020) is an intensity of a peak present in the range of 2θ = 12.7 ± 1.0°and I(021) is an intensity of a peak present in the range of 2θ = 27.3 ± 1.0°, when determined by X-ray diffraction analysis using Cu-Kα as an X-ray source.

A third thin film of molybdenum oxide in accordance with the first aspect of the present invention is characterized as satisfying the relationship 0 ≦ I(040)/I(110) ≦ 0.6, wherein I(040) is an intensity of a peak present in the range of 2θ = 25.7 ± 1.0°and I(110) is an intensity of a peak present in the range of 2θ = 23.3 ± 1.0°, when determined by X-ray diffraction analysis using Cu-Kα as an X-ray source.

A fourth thin film of molybdenum oxide in accordance with the first aspect of the present invention is characterized as satisfying the relationship 0 ≦ I(040)/I(021) ≦ 0.5, wherein I(040) is an intensity of a peak present in the range of 2θ = 25.7 ± 1.0°and I(021) is an intensity of a peak present in the range of 2θ = 27.3 ± 1.0°, when determined by X-ray diffraction analysis using Cu-Kα as an X-ray source.

In the first aspect of the present invention, the substrate can preferably serve as a current collector for the electrode. Preferably, a surface of the substrate that carries the thin film thereon has a surface roughness Ra of 0.001 - 1 µm. The use of the substrate having such surface roughness Ra enables efficient current collection since it assures good adhesion between the substrate serving as the current collector and the thin film of molybdenum oxide even when the latter is subjected to expansion and shrinkage during charge and discharge. The surface roughness Ra is defined in Japanese Industrial Standards (JIS B 0601-1994) and can be measured as by a surface roughness meter.

In the first aspect of the present invention, the surface roughness Ra of the substrate preferably satisfies the relationship Ra ≦ t, where t is a thickness of the molybdenum oxide thin film.

Also in the first aspect of the present invention, the surface roughness Ra of the substrate and a mean spacing of local peaks of profile S preferably satisfy the relationship S ≦ 100Ra. The mean spacing of local peaks of profile S is also defined in Japanese Industrial Standards (JIS B 0601-1994) and can be measured as by a surface roughness meter.

In the first aspect of the present invention, the surface roughness Ra of the substrate is preferably 0.0105 µm or larger, more preferably in the range of 0.011 - 0.1 µm, most preferably in the range of 0.012 - 0.09 µm. By depositing, in the form of a thin film, molybdenum oxide on the substrate having a surface roughness Ra within the specified range, a morphology of the deposited molybdenum oxide thin film can be varied so that an electrode having improved cycle characteristics can be obtained. That is, the molybdenum oxide thin film, if deposited on the substrate roughened at its surface to a surface roughness Ra within the specified range, has a structure which shows good adhesion to the substrate serving as a current collector.

In the first aspect of the present invention, an oxidation number of molybdenum in the molybdenum oxide thin film is preferably 5 or larger. Molybdenum with an oxidation number of 5 or larger undergoes a large change in valence number during charge and discharge. Also, an accompanying change of an electronic structure of the active material increases a discharge potential. As a result, the further increased energy density is obtained.

In the first aspect of the present invention, the molybdenum oxide thin film may further contain a dissimilar element.

A nonaqueous electrolyte rechargeable battery in accordance with a second aspect of the present invention has a positive electrode, a negative electrode and a nonaqueous electrolyte. Characteristically, an active material of the positive electrode is molybdenum oxide and an active material of the negative electrode is silicon in the form of a thin film deposited on a negative current collector.

In the second aspect of the present invention, molybdenum oxide is used as active material of the positive electrode. Lithium cobalt oxide is the most widely-used positive active material in the art and cobalt therein undergoes a change of oxidation number from 3 to 4. On the other hand, molybdenum in molybdenum oxide for use in the second aspect of the present invention is changeable in oxidation number from 4 to 5 or larger. For this reason, molybdenum oxide provides a higher capacity than lithium cobalt oxide. Accordingly, the use of molybdenum oxide in combination with the silicon thin film results in the successful increase of an energy density. It also betters a balance between positive and negative electrode capacities and thereby permits a control of respective thicknesses of the positive and negative electrode plates. This prevents shortage of the electrolyte at each electrode plate and thus improves cycle characteristics.

In the second aspect of the present invention, the molybdenum oxide for use as the positive active material may be in the form of a powder, or alternatively, a thin film deposited on the positive current collector. Molybdenum oxide, if used in the powder form, may be mixed with a binder and a conductive filler such as graphite powder to provide a slurry which is subsequently coated onto a positive current collector such as an aluminum foil.

Preferably, the thin film of molybdenum oxide may be deposited on the aluminum-containing, substrate, e.g., an aluminum foil, by such thin film-forming techniques as CVD, sputtering and spraying.

The molybdenum oxide thin film in accordance with the second aspect of the present invention may be either noncrystalline or crystalline. If crystalline, it preferably has X-ray diffraction peaks as illustrated in the description of the first aspect of the present invention.

The oxidation number of molybdenum in the molybdenum oxide thin film is preferably 5 or larger.

Molybdenum in molybdenum oxide, if having an oxidation number of 5 or larger, undergoes a large change in valence number during charge and discharge. Also, an accompanying change of an electronic structure of the active material increases a discharge potential. As a result, the further increased energy density is obtained. The molybdenum oxide thin film may further contain a dissimilar element.

In the second aspect of the present invention, used as the negative active material is silicon in the form of a thin film deposited on the negative current collector.

Preferably, the silicon thin film has a microcrystalline or noncrystalline form. Silicon is identified as being microcrystalline when Raman spectroscopy detects substantial presence of a peak around 520 cm⁻¹ which corresponds to a crystalline region and a peak around 480 cm⁻¹ which corresponds to a noncrystalline region, and as being noncrystalline when Raman spectroscopy detects substantial absence of a peak around 520 cm⁻¹ corresponding to the crystalline region and substantial presence of a peak around 480 cm⁻¹ corresponding to the noncrystalline region.

In the second aspect, the silicon thin film can be deposited on a negative current collector, such as a copper foil, by such thin film-forming techniques as CVD, sputtering, spraying and vapor evaporation.

In the second aspect of the present invention, an aluminum foil and a copper foil are particularly preferred for use as the positive and negative current collectors, respectively. Where a copper foil is used as the negative current collector, the use of an electrolytic copper foil having a large value for surface roughness Ra is particularly preferred.

The positive and negative current collectors are hereinafter referred to as a "current collector", collectively.

In the second aspect of the present invention, a surface of the current collector that carries the silicon thin film thereon preferably has a surface roughness Ra of 0.01 - 1 µm, and a surface of the current collector that carries the molybdenum oxide thin film thereon preferably has a surface roughness Ra of 0.001 - 1 µm. The use of the current collector having such surface roughness Ra enables efficient current collection since it assures good adhesion between the current collector and the thin film of silicon or molybdenum oxide even when the thin film is subjected to expansion and shrinkage during charge and discharge. The surface roughness Ra is defined in Japanese Industrial Standards (JIS B 0601-1994) and can be measured as by a surface roughness meter.

In the second aspect of the present invention, the surface roughness Ra of the current collector preferably satisfies the relationship Ra ≦ t, where t is a thickness of the silicon or molybdenum oxide thin film.

Also in the second aspect of the present invention, the surface roughness Ra of the current collector and a mean spacing of local peaks of profile S preferably satisfy the relationship S ≦ 100Ra. The mean spacing of local peaks of profile S is also defined in Japanese Industrial Standards (JIS B 0601-1994) and can be measured as by a surface roughness meter.

### BRIEF DESCRIPTION OF THE DRAWINGS

Figure 1 is a chart showing an X-ray diffraction pattern of the molybdenum oxide thin film obtained in one example of the present invention;
Figure 2 is a photomicrograph taken using an electron microscope, showing a surface of the molybdenum oxide thin film obtained in one example of the present invention;
Figure 3 is a chart showing an X-ray diffraction pattern of the molybdenum oxide thin film obtained in another example of the present invention;
Figure 4 is a chart showing an X-ray diffraction pattern of a commercially available crystal MoO₃;
Figure 5 is a schematic sectional view showing the beaker cell constructed in examples;
Figure 6 is a schematic sectional view showing the thin film-forming apparatus employed in examples of the present invention;
Figure 7 is a photomicrograph taken using an electron microscope, showing a surface of the molybdenum oxide thin film of the positive electrode b1 fabricated in an example of the present invention;
Figure 8 is a photomicrograph taken using an electron microscope, showing a surface of the molybdenum oxide thin film of the positive electrode b2 fabricated in an example of the present invention;
Figure 9 is a photomicrograph taken using an electron microscope, showing a surface of the molybdenum oxide thin film of the positive electrode b3 fabricated in an example of the present invention; and
Figure 10 is a graph showing a capacity retention rate on each cycle for cells using the positive electrodes b1, b2 and b3.

### BEST MODE FOR CARRYING OUT THE INVENTION

The present invention is below described in more detail by way of Examples. It will be recognized that the following examples merely illustrate the practice of the present invention but are not intended to be limiting thereof. Suitable changes and modifications can be effected without departing from the scope of the present invention.

### EXPERIMENT 1

A rechargeable lithium battery was constructed having a positive electrode comprised of molybdenum oxide in the form of a thin film deposited on an aluminum foil substrate by a sputtering technique. Another rechargeable lithium battery was constructed using a marketed MoO₃ crystal powder as the positive electrode material. The electrochemical properties thereof were compared.

### (Fabrication of Electrode)

A thin film of molybdenum oxide was deposited by a sputtering technique on a rolled aluminum foil (20 µm thick) as a substrate, using MoO₃ as a target. The detailed thin film-forming conditions are listed in Table 1. The deposited thin film of molybdenum oxide was about 2 µm thick. A surface roughness Ra of the rolled aluminum foil was 0.001 - 0.010 µm.

**Table 1**

| | During Film Formation |
|---|---|
| Argon Gas Flow Rate | 100 sccm |
| Oxygen Gas Flow Rate | 10 sccm |
| Reaction Pressure | 0.1 Pa |
| RF Power | 200 W |
| Substrate Temp. | Not Heated (Without Temp. Control) |
| Target Material | MoO₃ |

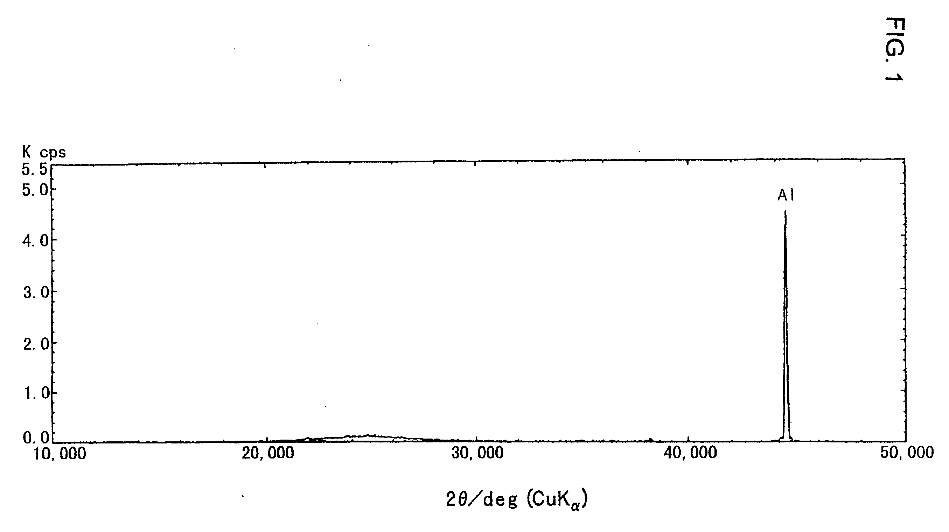

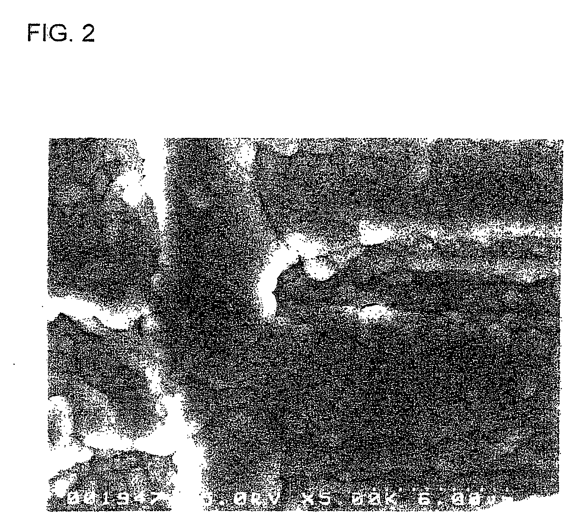

X-ray diffraction (XRD) measurement was performed for the obtained molybdenum oxide thin film. The resulting XRD chart is shown in Figure 1. As shown in Figure 1, the measurements revealed no clear peak other than a peak for aluminum of the substrate and confirmed this molybdenum oxide thin film as being noncrystalline (amorphous). Next, the molybdenum oxide thin film was observed using a scanning electron microscope (SEM) at a magnification of 5,000X. A photomicrograph taken using SEM is shown in Figure 2. As shown in Figure 2, a dense aggregate of particles having diameters of 1.5 µm and below was observed at a surface of the oxide thin film obtained.

Also, an oxidation number of molybdenum in this thin film was found to be 4.2. The aluminum foil substrate carrying the thin film thereon was cut into a specific size to fabricate a positive electrode a1.

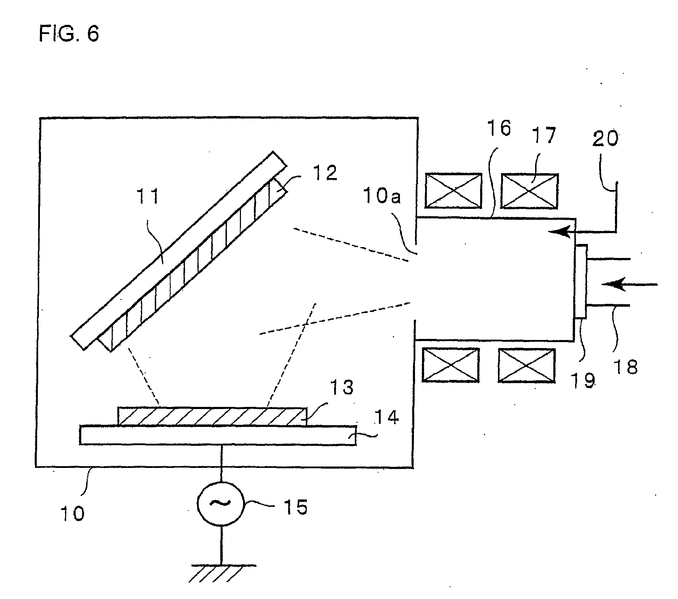

Next, a thin film of molybdenum oxide was deposited by a sputtering technique on a rolled aluminum foil similar to the preceding one, while accompanied by activation of oxygen in a sputtering gas and a surface reaction, so that an oxidation number of molybdenum was increased in a resulting thin film than in the thin film of the positive electrode a1. The employed thin film-forming apparatus is shown in Figure 6.

As shown in Figure 6, located within a vacuum chamber 10 is a substrate holder 11 on which an aluminum foil, as a substrate 12, is placed. A target 13 of MoO₃ is provided on an electrode 14 to lie beneath the substrate 12. An RF power source 15 is connected to the electrode 14.

A side wall of the vacuum chamber that positions sideward of the substrate 12 has an opening 10a. An ECR plasma generation chamber 16 is provided to cover the opening 10a from outside. Solenoid coils 17 are mounted circumferentially of the ECR plasma generation chamber 16 for production of an external magnetic field. The ECR plasma generation chamber 16 has at its end a microwave inlet window 19 to which a microwave waveguide 18 is connected. Also, a gas inlet tube 20 is also connected to the plasma generation chamber 16 for introduction of an argon or oxygen gas thereinto.

A microwave generated in a microwave supplying means, not shown in the drawing, is passed through the microwave waveguide 18 and the microwave inlet window 19 and introduced into the ECR plasma generation chamber 16. A high density plasma is produced within the ECR plasma generation chamber 16 by interaction of a radio-frequency field produced by the microwave with a magnetic field produced within the solenoid coils 17. This plasma is guided to pass through the opening 10a along a diverging magnetic field produced by the solenoid coils 17 into the vacuum chamber 10.

Using the apparatus shown in Figure 6, an argon gas at 100 sccm and an oxygen gas at 10 sccm, as sputtering gases, were introduced though the gas inlet tube 20 into the ECR plasma generation chamber 16 where an ECR plasma was produced by the interaction of the radio-frequency field and magnetic field. The ECR plasma was then directed to pass through the opening 10a and bombard the substrate 12. Concurrently, an RF power was applied to the electrode 14 from the RF power source 15 so that a plasma is produced between the substrate 12 and the target 13. The subsequent sputtering of MoO₃ of the target 13 by the plasma resulted in the formation of a molybdenum oxide thin film on the substrate 12. An aluminum foil roughened at its surface by polishing with a #800 sand paper served as the preceding substrate 12. The detailed thin film-forming conditions are listed in Table 2. A thickness of the deposited thin film of molybdenum oxide was about 2 µm. The surface-roughened aluminum foil was found to have a surface roughness Ra of 0.093 µm.

**Table 2**

| | During Film Formation |
|---|---|
| Argon Gas Flow Rate | 100 sccm |
| Oxygen Gas Flow Rate | 10 sccm |
| Reaction Pressure | 0.1 Pa |
| RF Power | 200 W |
| Microwave Power | 200 W |
| Substrate Temp. | Not Heated (Without Temp. Control) |
| Target Material | MoO₃ |

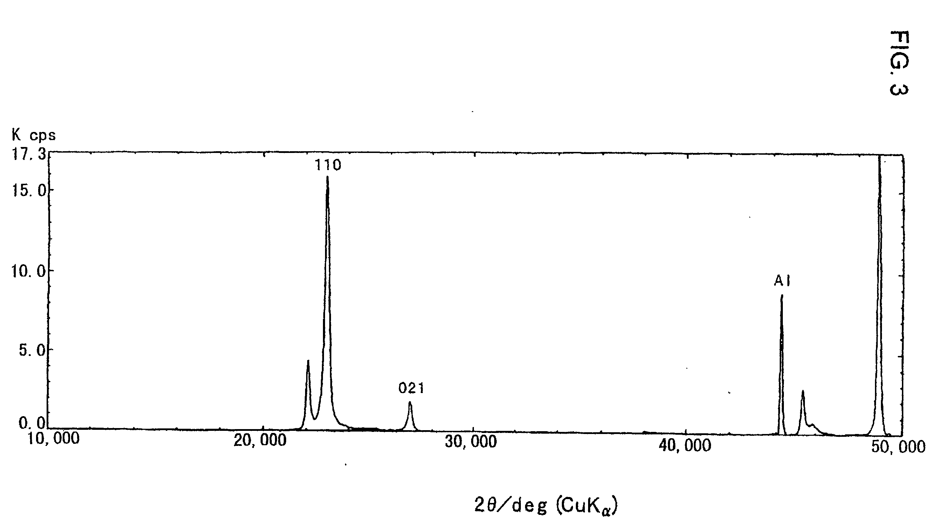

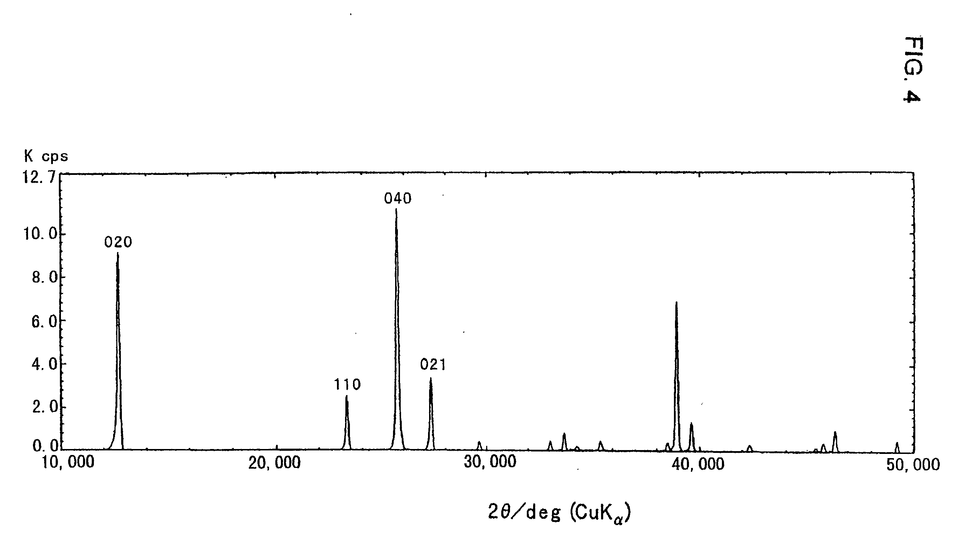

Figure 3 is an XRD chart of the obtained molybdenum oxide thin film. Figure 4 is an XRD chart of the commercially available powder of crystalline MoO₃ for a comparative purpose. The XRD chart of Figure 3 and the XRD chart of Figure 4 for the crystalline MoO₃ show a similar pattern of peaks but differ largely from each other in terms of peak intensity ratios. Particularly, the molybdenum oxide thin film exhibits the reduced (0k0) reflection peak relative to crystalline MoO₃. That is, the XRD chart of Figure 4 for the crystalline MoO₃ shows that a ratio of the (020) peak intensity to (110) peak intensity, I(020)/I(110), is 3.61; a ratio of the (020) peak intensity to (021) peak intensity, I(020)/I(021), is 2.68; a ratio of the (040) peak intensity to (110) peak intensity, I(040)/I(110), is 4.35; and a ratio of the (040) peak intensity to (021) peak intensity, I(040)/I(021), is 3.23. In contrast, the XRD chart of Figure 3 shows that I(020)/I(110) is 0.01, I(020)/I(021) is 0.09, I(040)/I(110) is 0.01 and I(040)/I(021) is 0.09. These are considered to result from different conditions of crystal growth between the thin film of molybdenum oxide and the crystalline MoO₃ marketed in the trade.

An oxidation number of molybdenum in the deposited molybdenum oxide thin film was measured to be 5.5. This thin film, together with underlying aluminum foil substrate, were cut into a predetermined size to fabricate a positive electrode a2.

For a comparative purpose, 90 parts by weight of the marketed crystalline powder of MoO₃, 5 parts by weight of artificial graphite powder, and an N-methyl-2-pyrrolidone (NMP) solution containing 5 parts by weight of polyvinylidene fluoride were mixed to prepare a slurry. This slurry was coated on one surface of a rolled aluminum foil as similar to the preceding one by a doctor blade technique to provide a layer of active material thereon, vacuum dried at 150 °C for 2 hours and cut into a predetermined size to fabricate a positive electrode a3.

### (Preparation of Electrolyte Solution)

1 mole/liter of LiPF₆ was dissolved in a mixed solvent containing ethylene carbonate and diethyl carbonate at a 1:1 ratio by volume to prepare an electrolyte solution.

### (Construction of Beaker Cells)

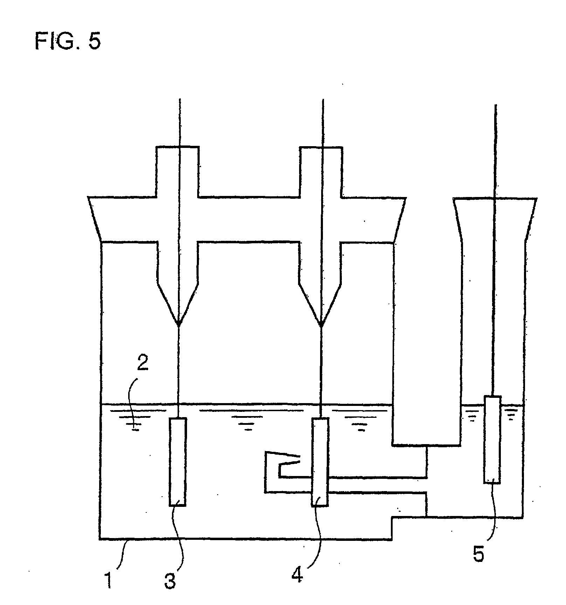

Using each of the above-fabricated electrodes a1 - a3 as a working electrode, a beaker cell as shown in Figure 5 was constructed. As shown in Figure 5, the beaker cell includes a counter electrode 3, a working electrode 4 and a reference electrode 5, which are all immersed in an electrolyte solution 2 contained in a container 1. The above-prepared electrolyte solution was used as the electrolyte solution 2. Metallic lithium was used for both the counter electrode 3 and the reference electrode 5.

### (Charge-Discharge Test)

Each of the above-constructed beaker cells was discharged at 25°C at a constant current of 0.2 mA to 1.0 V (vs. Li/Li⁺). This was recorded as an initial discharge. It was then charged at a constant current of 0.2 mA to 3.5 V (vs. Li/Li⁺) and further at a constant current of 0.067 mA to 3.5 V (vs. Li/Li⁺), and then discharged under the same conditions as described above. This was recorded as a second-cycle discharge. Discharge capacity, average discharge potential and discharge energy density for each beaker cell are given in Table 3.

**Table 3**

| Initial Discharge | | | |
|---|---|---|---|
| Positive Electrode | Discharge Capacity (mAh/g) | Average Discharge Potential (V(vs.Li/Li⁺)) | Discharge Energy Density (mWh/g) |
| a1 | 460 | 1.80 | 827 |
| a2 | 336 | 2.26 | 757 |
| a3 | 185 | 2.36 | 437 |

| 2nd-cycle Discharge | | | |
|---|---|---|---|
| Positive Electrode | Discharge Capacity (mAh/g) | Average Discharge Potential (V(vs.Li/Li⁺)) | Discharge Energy Density (mWh/g) |
| a1 | 294 | 1.54 | 453 |
| a2 | 280 | 2.17 | 609 |
| a3 | 157 | 2.24 | 352 |

As can be clearly seen from the results shown in Table 3, the discharge capacity and average discharge potential of each of the positive electrodes a1 - a3 drop markedly between initial discharge and 2nd-cycle discharge but remain relatively constant on the subsequent cycles.

On the 2nd-cycle discharge, the positive electrodes a1 and a2 both exhibit higher discharge capacities and discharge energy densities than the positive electrode a3. This is most probably due to the difference in crystal structure between the molybdenum oxide thin film and crystalline MoO₃.

Also on the 2nd-cycle discharge, the positive electrode a2 exhibits lower discharge capacity and higher average discharge potential than the electrode a1. Accordingly, the positive electrode a2 exhibits higher discharge energy density than the positive electrode a1. In the construction of a rechargeable lithium battery, the use of a material other than a lithium metal for the negative electrode may cause a potential rise of the positive electrode at the final stage of discharge. Then, discharge is most likely terminated before the positive electrode potential drops to 1.0 V (vs. Li/Li⁺). It is thus considered that the use of the electrode a2 having the higher average discharge potential than the electrode a1 is preferred for use as a positive electrode of a rechargeable lithium battery.

The preceding results demonstrate that the molybdenum oxide thin film deposited on the aluminum foil by a sputtering technique, when used as a positive active material, exhibits the increased energy density compared to the marketed crystalline MoO₃. It has been also confirmed that the similar effects are obtained with the use of respective molybdenum oxide thin films deposited by vacuum evaporation, CVD and spraying techniques.

### EXPERIMENT 2

### (Fabrication of Positive Electrode b1)

A rolled aluminum foil (20 µm thick) was polished with a #4000 sand paper to provide a substrate having a rough surface. The substrate was found to have a surface roughness of 0.0128 µm. Measurement of surface roughness Ra was performed using a feeler-type surface profilimeter Detak ST (available from Nippon Shinku Co., Ltd.) at a measurement distance of 2.0 mm. The correction for a deflection gain was carried out prior to calculation of the surface roughness Ra. The correction values, a low pass = 200 µm and a high pass = 20 µm, were added to achieve deflection correction. The surface roughness Ra is given by an automatically calculated value. The surface roughness Ra in the preceding Experiment 1 was measured in a similar fashion.

Next, using the apparatus shown in Figure 6, a thin film of molybdenum oxide was deposited by a sputtering technique on the roughened surface of the preceding aluminum foil, while accompanied by activation of oxygen in a sputtering gas and a surface reaction.

Specifically, an argon gas at 100 sccm and an oxygen gas at 20 sccm, both as sputtering gases, were introduced into the ECR plasma source where an ECR plasma was generated by the action of a microwave power and a magnetic field. The ECR plasma generated was then directed onto the aluminum foil substrate. Concurrently, an RF power was applied to a sputtering source where a target of molybdenum oxide was disposed, so that a plasma was produced between the substrate and the target. The subsequent sputtering of the molybdenum oxide by the produced plasma resulted in the formation of a molybdenum oxide thin film on the substrate. The detailed thin film-forming conditions are listed in Table 4. The deposited thin film of molybdenum oxide was about 2 µm thick.

**Table 4**

| | During Film Formation |
|---|---|
| Argon Gas Flow Rate | 100 sccm |
| Oxygen Gas Flow Rate | 20 sccm |
| Reaction Pressure | 0.1 Pa |
| RF Power | 350 W |
| Microwave Power | 200 W |
| Substrate Temp. | Not Heated (Without Temp. Control) |
| Target Material | MoO₃ |

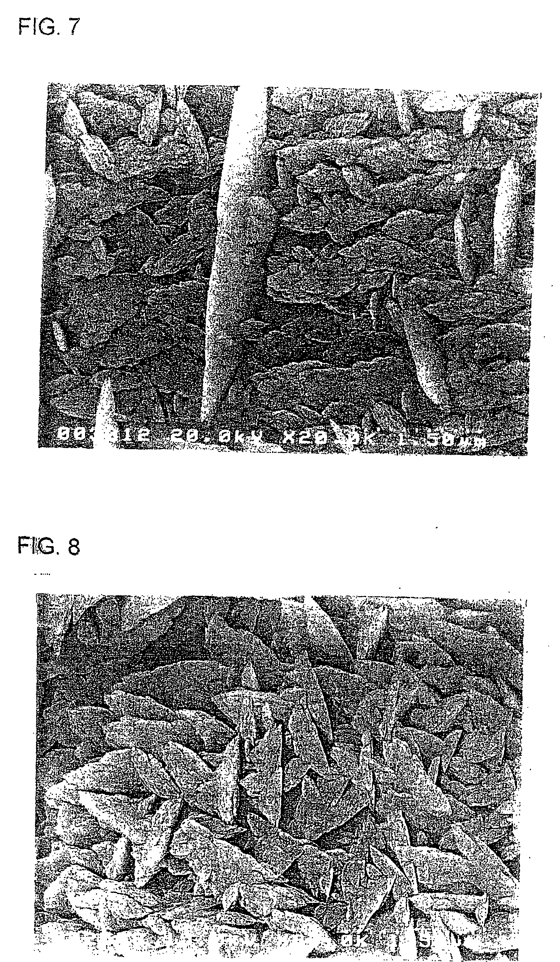

Figure 7 is a photomicrograph taken using a scanning electron microscope (at a magnification of 20,000X), showing a surface of the deposited thin film of molybdenum oxide.

The deposited thin film, together with the underlying aluminum foil substrate, were cut into a predetermined size to fabricate a positive electrode b1.

### (Fabrication of Positive Electrode b2)

A rolled aluminum foil (20 µm thick) was polished with a #800 sand paper to a surface roughness Ra of 0.0930 µm.

This aluminum foil was used as a substrate on which a thin film of molybdenum oxide was to be deposited. Otherwise, the procedure used in the fabrication of the positive electrode b1 was followed to fabricate a positive electrode b2 with a predetermined size.

Figure 8 is a photomicrograph taken using a scanning electron microscope (at a magnification of 20,000X), showing a surface of the deposited thin film of molybdenum oxide.

### (Fabrication of Positive Electrode b3)

For a comparative purpose, a rolled aluminum foil (20 µm thick) was left unpolished and used as a substrate on which a thin film of molybdenum oxide was to be deposited. Otherwise, the procedure used in the fabrication of the positive electrode b1 was followed to fabricate a positive electrode b3 with a predetermined size. The substrate was found to have a surface roughness Ra of 0.0026 µm.

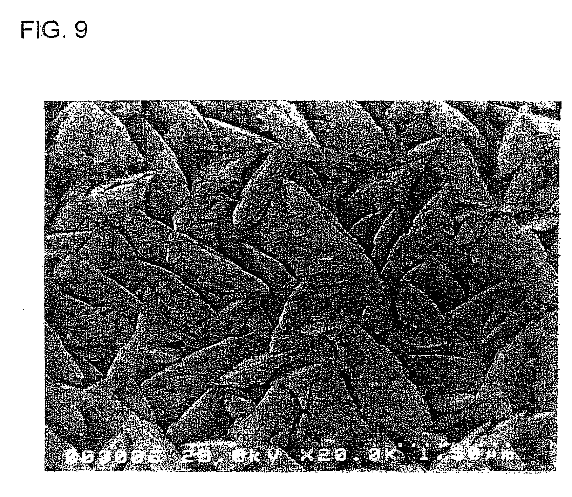

Figure 9 is a photomicrograph taken using a scanning electron microscope (at a magnification of 20,000X), showing a surface of the deposited thin film of molybdenum oxide.

### (Preparation of Electrolyte Solution)

1 mole/liter of LiPF₆ was dissolved in a mixed solvent containing ethylene carbonate and diethyl carbonate at a 4:6 ratio by volume to prepare an electrolyte solution.

### (Construction of Beaker Cells)

The procedure of Experiment 1 was followed, except that the positive electrodes b1, b2 and b3 were used as the working electrode, to construct beaker cells.

### (Charge-Discharge Test)

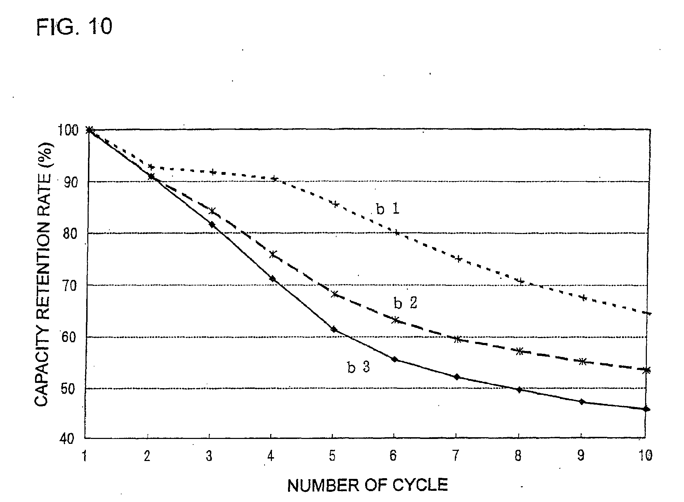

Each beaker cell was charged and discharged under the same conditions as used in the charge-discharge test of Experiment 1. After 10 cycles, a ratio of a discharge capacity on each cycle to the initial discharge capacity, i.e., a capacity retention rate, was calculated. The results are shown in Figure 10.

As apparent from Figure 10, the positive electrodes b1 and b2 having the molybdenum oxide thin films deposited on the roughened surfaces of their respective substrates exhibit the improved cycle characteristics relative to the positive electrode b3 having the molybdenum oxide thin film deposited on the unroughened surface of its substrate. This shows that a thin film of molybdenum oxide, if deposited on a roughened surface of a substrate, exhibits improved cycle characteristics. Superior cycle characteristics are obtained particularly when the positive electrode b1 is used. This demonstrates that a surface roughness Ra of a substrate is preferably 0.0105 µm or larger, more preferably 0.011 - 0.1 µm, still more preferably 0.012 - 0.09 µm.

As apparent from comparisons of Figures 7, 8 and 9 showing respective surfaces of the positive electrodes b1, b2 and b3, the texture of the deposited thin film of molybdenum oxide varies depending upon the degree of surface roughness of the substrate. As such, the roughened surface of the substrate is considered as being an important contributor to the highly adherent structure of the molybdenum oxide thin film deposited thereon.

### EXPERIMENT 3

An electrode was fabricated by depositing a microcrystalline thin film of silicon active material on an electrolytic copper foil as a current collector. Electrochemical properties of this electrode when used as a negative electrode of a rechargeable lithium battery were examined.

### (Fabrication of Negative Electrode)

A microcrystalline silicon thin film was deposited on an electrolytic copper foil (thickness = 17 µm and surface roughness Ra = 0.188 µm), as a substrate, by a CVD process using silane (SiH₄) as a source gas and hydrogen as a carrier gas. Specifically, the copper foil substrate was placed on a heater in a reaction chamber. An interior of the reaction chamber was evacuated by a vacuum exhausting system to a pressure of 1 Pa or below. Thereafter, silane (SiH₄) as a source gas and hydrogen (H₂) as a carrier gas were introduced from a source gas inlet port into the reaction chamber. The substrate was heated by a heater to a temperature of 180 °C. A degree of vacuum was adjusted to a reaction pressure by a vacuum exhausting system. An RF power source was operated to generate a radio frequency which was subsequently introduced via the electrode to induce a glow discharge. The detailed thin film-forming conditions are listed in Table 5.

**Table 5**

| Item | During Film Formation |
|---|---|
| Source Gas(SiH₄) Flow Rate | 10 sccm |
| Carrier Gas(H₂) Flow Rate | 200 sccm |
| Substrate Temp. | 180 °C |
| Reaction Pressure | 40 Pa |
| RF Power | 555 W |

The microcrystalline silicon thin film was deposited under the above-specified conditions to a thickness of about 2 µm. Observation of the resulting thin film by an electron microscope (at a magnification of 2,000,000X) revealed the presence of noncrystalline regions located in a manner to surround a crystal region consisting of minute crystal grains, and confirmed a noncrystalline nature of the thin film. Raman spectroscopic analysis revealed the presence of a peak around 480 cm⁻¹ and a peak around 520 cm⁻¹. Thus, the resulting silicon thin film is identified as being of microcrystalline nature.

The electrolytic copper foil carrying thereon a deposit of microcrystalline silicon thin film was cut into a 2 cm x 2 cm size to fabricate an electrode c1.

### (Preparation of Electrolyte Solution)

An electrolyte solution was prepared in the same manner as in Experiment 1.

### (Construction of Beaker Cell)

Using the electrode c1 as a working electrode, a beaker cell was constructed in the same manner as in Experiment 1.

### (Charge-Discharge Test)

The above beaker cell was charged at 25°C and at a constant current of 0.5 mA until a potential based on the reference electrode reached 0 V, and then discharged to 0.5 V. The discharge capacity on this cycle was 1,550 mAh/g. The beaker cell was also confirmed to exhibit stable discharge capacity on the second and subsequent cycles.

After the above beaker cell was charged to a potential of 0 V (vs. Li/Li⁺), the negative electrode c1 was removed and combined with any one of the molybdenum oxide positive electrodes a1 - a3 to fabricate a nonaqueous electrolyte rechargeable battery. A ratio by weight of the required positive active material to the negative active material is given in Table 6. For a comparative purpose, the result of the case using conventional positive active material, lithium cobalt oxide, is also given in Table 6. In Table 6, a discharge capacity of each positive active material is also shown. A value for discharge capacity of molybdenum oxide was measured at 1.0 - 3.5 V (vs. Li/Li⁺) and a value for discharge capacity of lithium cobalt oxide was measured at 2.75-4.3 V (vs. Li/Li⁺).

**Table 6**

| Positive Electrode | Discharge (mAh/g) | Required Weight of Positive Active Material When Negative Active Material Weight is Taken as 1 |
|---|---|---|
| a1 | 460 | 3.4 |
| a2 | 336 | 4.6 |
| a3 | 185 | 8.4 |
| LiCoO₂ | 157 | 9.9 |

As can be appreciated from the results shown in Table 6, in the case where the silicon thin film is used as negative active material, the reduced weight of positive active material is required when using molybdenum oxide as positive active material than when using lithium cobalt oxide, leading to the reduction in thickness of an electrode plate.

The second aspect of the present invention enables increase in energy density of a nonaqueous electrolyte rechargeable battery, improves a balance between a positive electrode capacity and a negative electrode capacity, and achieves thickness control of an electrode plate. Accordingly, it prevents shortage of electrolyte-solution in the electrode plate and improves cycle characteristics.

### UTILITY IN INDUSTRY

In accordance with the present invention, a nonaqueous electrolyte rechargeable battery using molybdenum oxide as positive active material is provided which has the improved capacity and energy density.

## Claims

1. A nonaqueous electrolyte rechargeable battery including a positive electrode, a negative electrode and a nonaqueous electrolyte, characterized as using a thin film of molybdenum oxide deposited on an aluminum-containing substrate as said positive electrode.

2. The nonaqueous electrolyte rechargeable battery as recited in claim 1, **characterized in that** said thin film was deposited on said substrate by a CVD, sputtering, vacuum evaporation or spraying process.

3. The nonaqueous electrolyte rechargeable battery as recited in claim 1 or 2, **characterized in that** said molybdenum oxide has an oxidation number of 5 or larger.

4. The nonaqueous electrolyte rechargeable battery as recited in any one of claims 1 - 3, **characterized in that** said thin film of molybdenum oxide satisfies the relationship 0 ≦ I(020)/I(110) ≦ 0.3, wherein I(020) is an intensity of a peak present in the range of 2θ = 12.7 ± 1.0° and I(110) is an intensity of a peak present in the range of 2θ = 23.3±1.0°, when determined by X-ray diffraction analysis using Cu-Kα as an X-ray source.

5. The nonaqueous electrolyte rechargeable battery as recited in any one of claims 1 - 4, **characterized in that** said thin film of molybdenum oxide satisfies the relationship 0 ≦ I(020)/I(021) ≦ 0.2, wherein I(020) is an intensity of a peak present in the range of 2θ = 12.7 ± 1.0° and I(021) is an intensity of a peak present in the range of 2θ = 27.3 ± 1.0°, when determined by X-ray diffraction analysis using Cu-Kα as an X-ray source.

6. The nonaqueous electrolyte rechargeable battery as recited in any one of claims 1 - 5, **characterized in that** said thin film of molybdenum oxide satisfies the relationship 0 ≦ I(040)/I(110) ≦ 0.6, wherein I(040) is an intensity of a peak present in the range of 2θ = 25.7 ± 1.0° and I(110) is an intensity of a peak present in the range of 2θ = 23.3 ± 1.0°, when determined by X-ray diffraction analysis using Cu-Kα as an X-ray source.

7. The nonaqueous electrolyte rechargeable battery as recited in any one of claims 1 - 6, **characterized in that** said thin film of molybdenum oxide satisfies the relationship 0 ≦ I(040)/I(021) ≦ 0.5, wherein I(040) is an intensity of a peak present in the range of 2θ = 25.7 ± 1.0° and I(021) is an intensity of a peak present in the range of 2θ = 27.3 ± 1.0°, when determined by X-ray diffraction analysis using Cu-Kα as an X-ray source.

8. The nonaqueous electrolyte rechargeable battery as recited in any one of claims 1 - 7, **characterized in that** said substrate has a surface roughness Ra of 0.001 - 1 µm.

9. The nonaqueous electrolyte rechargeable battery as recited in any one of claims 1 - 8, **characterized in that** the surface roughness Ra of said substrate satisfies the relationship Ra ≦ t, where t is a thickness of the thin film of molybdenum oxide.

10. The nonaqueous electrolyte rechargeable battery as recited in any one of claims 1 - 9, **characterized in that** the surface roughness Ra of said substrate and a mean spacing of local peaks of profile S have the relationship S ≦ 100Ra.

11. The nonaqueous electrolyte rechargeable battery as recited in any one of claims 1 - 10, **characterized in that** said substrate has a surface roughness Ra of 0.0105 µm or above.

12. The nonaqueous electrolyte rechargeable battery as recited in any one of claims 1 - 11, **characterized in that** said substrate has a surface roughness Ra of 0.011 - 0.1 µm.

13. The nonaqueous electrolyte rechargeable battery as recited in any one of claims 1 - 12, **characterized in that** said substrate has a surface roughness Ra of 0.012 - 0.09 µm.

14. The nonaqueous electrolyte rechargeable battery as recited in any one of claims 1 - 13, **characterized in that** said substrate is an aluminum foil.

15. A nonaqueous electrolyte rechargeable battery including a positive electrode, a negative electrode and a nonaqueous electrolyte, characterized as using molybdenum oxide as positive active material and using a thin film of silicon deposited on a negative current collector as negative active material.

16. The nonaqueous electrolyte rechargeable battery as recited in claim 15, **characterized in that** said molybdenum oxide is provided in the form of a thin film deposited on a positive current collector.

17. The nonaqueous electrolyte rechargeable battery as recited in claim 16, **characterized in that** said positive current collector is an aluminum-containing substrate.

18. The nonaqueous electrolyte rechargeable battery as recited in claim 16 or 17, **characterized in that** said positive current collector is an aluminum foil.

19. The nonaqueous electrolyte rechargeable battery as recited in any one of claims 16 - 18, **characterized in that** said molybdenum oxide is deposited in the form of a thin film by a CVD, sputtering, vacuum evaporation or spraying process.

20. The nonaqueous electrolyte rechargeable battery as recited in any one of claims 15 - 19, **characterized in that** said silicon thin film is microcrystalline or noncrystalline.

21. The nonaqueous electrolyte rechargeable battery as recited in any one of claims 15 - 20, **characterized in that** said silicon thin film is deposited by a CVD, sputtering, vacuum evaporation or spraying process.

22. The nonaqueous electrolyte rechargeable battery as recited in any one of claims 15 - 21, **characterized in that** said negative current collector is a copper foil.

23. The nonaqueous electrolyte rechargeable battery as recited in any one of claims 16 - 22, **characterized in that** said positive current collector has a surface roughness Ra of 0.001 - 1 µm.

24. The nonaqueous electrolyte rechargeable battery as recited in any one of claims 15 - 23, **characterized in that** said negative current collector has a surface roughness Ra of 0.01 - 1 µm.

25. The nonaqueous electrolyte rechargeable battery as recited in any one of claims 15 - 24, **characterized in that** the surface roughness Ra of said positive current collector and/or said negative current collector satisfies the relationship Ra ≦ t, where t is a thickness of the thin film deposited thereon.

26. The nonaqueous electrolyte rechargeable battery as recited in any one of claims 15 - 25, **characterized in that** the surface roughness Ra of said positive current collector and/or said negative current collector and a mean spacing of local peaks of profile S have the relationship S ≦ 100Ra.
